# EUROPEAN PATENT SPECIFICATION

(11) **EP 0 346 416 B1**
(45) Date of publication and mention of the grant of the patent: **12.05.1993**
(21) Application number: 88910428.7
(22) Date of filing: 14.11.1988
(51) Int. Cl.: C04B 7/26

(54) **HYDRAULIC CEMENT AND COMPOSITION EMPLOYING THE SAME**
HYDRAULISCHER ZEMENT UND EINE IHN ENTHALTENDE ZUSAMMENSETZUNG
CIMENT HYDRAULIQUE ET COMPOSITION L'UTILISANT

(30) Priority: 11.12.1987 US 133433
(43) Date of publication of application: 20.12.1989
(73) Proprietor: LONE STAR INDUSTRIES, INC., Stamford, Connecticut 06912 (US)
(72) Inventor: GRAVITT, Billy, B., Katy, TX 77450 (US); HEITZMANN, Richard, F., Pearland, TX 77581 (US); SAWYER, James, L., Friendswood, TX 77546 (US)
(74) Representative: Kyle, Diana
(86) International application number: US8804055
(87) International publication number: WO8905284

(56) References cited:
- GB-A- 2 051 031
- US-A- 4 028 130
- US-A- 4 101 332
- US-A- 4 432 800
- Chemical Abstracts, volume 95, no. 8, August 1981, (Columbus, Ohio, US), "Cementless binding material from fly ash", see page 295, abstract 66734k, & Cem.-Wapno-Gips 1980, (8-9), 220-2

## Description

### BACKGROUND OF THE INVENTION

Hydraulic cements, such as portland cement and blended hydraulic cements, consisting of portland cement and pozzolans, have, for many years, been used as an essential ingredient of the mortar and concrete used for construction of structures, highways, etc. In many instances, fly ash has been used as the pozzolanic component in blended hydraulic cements, and as a mineral admixture to replace part of the more expensive portland cement used in mortar or concrete. The use of fly ash, in place of part of the portland cement or as a constituent in blended cements reduces the large amount of energy required to produce the hydraulic cements required for mortar and concrete. However, the prior art has taught that no more than 35 to 45 per cent of the portland cement can be replaced with fly ash. According to the teachings of the prior art, when more fly ash than that is employed, the resulting mortars and concretes do not have sufficient strength.

The prior art has also taught that hydraulic cementless binders can be obtained exclusively from industrial wastes. In particular it has been disclosed that a cementless binder is obtained by treating fly ash with an aqueous solution of the activator (e.g. industrial waste water containing sodium hydroxide) under conditions of low-pressure steaming (DERDACKA-GRZYMEK Anna, STOK Andrzej, "Multiindustry Institute of Building and Refractory Materials, Academy of Mining and Metallurgy in Krakow", No. 58, Cement, Concrete, Vol. 95 (1981), Abstract No. 66734K).

It now has been found, however, according to the present invention, that a hydraulic cement where all of the portland cement or blended hydraulic cement is replaced with fly ash can be formed by activating a Class C fly ash with an alkali metal containing material. There is, consequently, a further reduction of cost and energy requirements.

### BRIEF DESCRIPTION OF THE INVENTION

In accordance with the present invention, a hydraulic cement composition is provided consisting essentially of Class C fly ash and an alkali metal compound containing activator. The activator consists of one or more materials selected from the class consisting of potassium hydroxide, potassium carbonate, sodium hydroxide, sodium carbonate and portland cementkiln dust. The amount of alkali metal compound containing activator employed, per 100 parts of the total composition, can vary from about 1/2 to 10 parts, by weight. In general, when one of the listed materials other than portland cement kiln dust is employed, no more than 4 parts by weight are used, preferably, between 1/2 and 3 parts, by weight.

Included in the formulation are appropriate set control materials such as citric acid, borax, Cormix®, WRDA®, Daracem® 100, or other admixtures commonly used in concrete formulations. The admixture should comprise from about 1/2 to 3 parts, by weight, of at least one of the referenced materials per 100 total parts of cement composition.

This hydraulic cement achieves both high early strengths and high ultimate strengths. It can be utilized for rapid concrete repair or construction. This cement can be utilized in the production of precast and prestressed concrete, with or without heat curing.

The cement composition of the present invention includes the following components, by weight:
From 90 to 97 parts Class C fly ash
From 1/2 to 10 parts alkali metal compound containing activator
From 1/2 to 3 parts admixture
In addition to the materials in the above formulation, other materials can be added to the composition, as, for example, retarders and water reducers commonly used in concrete formulations. Various substitutions are also possible for the required materials. While potassium hydroxide is the preferred alkali metal compound containing activator, sodium hydroxide, sodium carbonate, potassium carbonate, and portland cement kiln stack dust can replace all or part of the potassium hydroxide. As indicated, when any of the referenced materials other than portland cement kiln stack dust is employed, the amount of material is generally from 1/2 to 4 parts, by weight, for each 100 part of the cement composition, preferably from about 1/2 to 3 parts, by weight.

When the hydraulic cement of the present invention is used in concrete or mortar, the resulting hardened material has sufficient strength that it can be put into service a few hours after being placed. This strength can be obtained with or without heat curing.

### DESCRIPTION OF PREFERRED EMBODIMENTS

The hydraulic cement of the present invention has, as previously indicated, the following components by weight:
90 to 97 parts Class C fly ash
1/2 to 10 parts alkali metal compound containing activator
1/2 to 3 parts admixture
The fly ash is a Class C fly ash as classified in ASTM C-618.

When potassium hydroxide is used as the alkali metal compound containing activator, it can be in the form of flakes, pellets, or water solution. Sodium hydroxide, potassium carbonate, sodium carbonate, and high alkali kiln stack dusts, such as those collected during the production of portland cement, can also be utilized as a source of alkali metal ions.

A preferred admixture is citric acid which can be in any available grade, such as fine crystal, powder, or liquid. Salts of citric acid can be used.

Borax, a mineral with the composition Na₂0.2B₂0₃.10H₂0., can be used in any available grade and can be replaced, all or in part, by other available admixtures that control the set of concrete mixtures. The major distinction between the cement of the present invention and prior art is the use of fly ash with an alkali metal compound containing activator to produce a hydraulic cement with very early strengths, and without portland cement.

All of the components can be interground or interblended and used as a complete cement without additional admixtures. In an alternative, the sources of the alkali metal ion, citric acid, and borax, or other admixtures, may be added at the concrete mixer, in a dry or liquid form, as an admixture or as a second component. When all of the materials are blended together, so that only water and aggregate are required to obtain a mortar or concrete, the control problems that can occur when materials are mixed in the field are eliminated or minimized. On the other hand, when the various materials are blended in the field, there is an economy of storage and shipping. In addition, the two component procedure does allow for greater control of working time.

The following are given as examples of formulations of the hydraulic cement of the present invention. They should be considered only as illustrative and not as limiting, in any way, the full scope of the invention as covered in the appended claims. All parts are by weight. The Class C fly ash used in the following examples had the properties set forth below:

### CLASS C FLY ASH

| CHEMICAL ANALYSIS (AS RECEIVED %) | |
|---|---|
| Si0₂ | 37.60 |
| Al₂0₃ | 20.47 |
| Fe₂0₃ | 5.44 |
| Ca0 | 21.54 |
| Mg0 | 4.61 |
| S0₃ (by LECO Furnace 2.12%) | 1.71 |
| Na₂0 | 2.78 |
| K₂0 | 0.52 |
| Ti0₂ | 1.05 |
| Sr0 | 0.65 |
| Loss | 0.41 |

### FINENESS

SIEVE No. 325 = 82.3% passing
BLAINE = 4270 cm²/g

### X-RAY DIFFRACTION - CRYSTAL STRUCTURES PRESENT:

1) Si0₂ (silicon oxide)
2) Fe₂0₃ (iron oxide)
3) Mg0 (magnesium oxide)
4) Ca0 (calcium oxide)
5) Ti0₂ (titanium oxide)

### EXAMPLE 1

A cement mixture was formed consisting of:
96.29 parts Class C fly ash
1.41 parts potassium hydroxide
1.28 parts citric acid
1.02 parts borax

### EXAMPLE 2

A concrete was prepared employing the cement of Example 1 and other necessary materials as indicated below:
825 parts of cement as Example 1
1213 parts sand
1820 parts gravel
142 parts water
The various materials were mixed in a concrete mixer. The concrete had an open or working time of 25 minutes. Part of the concrete was cast in molds and cured at ambient temperature (73°F) (22.8°C). This concrete had compressive strengths as follows:

| Age | Strength |
|---|---|
| 3 hours | 1,800 psi (12410.6 kPa) |
| 4 hours | 2,000 psi (13789.5 kPa) |
| 1 day | 4,000 psi (27579.0 kPa) |
| 3 days | 6,600 psi (45505.4 kPa) |
| 7 days | 8,800 psi (60673.9 kPa) |
| 28 days | 10,400 psi (71705.5 kPa) |

The remaining concrete was cast in molds and stored at ambient temperature (73°F) (22.8°C) for one hour, then cured in steam at 195°F (90.6°C) for one and one-half hours. Specimens were then cured in ambient (73°F) (22.8°C) air until tested. This concrete had compressive strengths as follows:

| Age | Strength |
|---|---|
| 3 hours | 3,600 psi (24821.1 kPa) |
| 4 hours | 4,800 psi (33094.8 kPa) |
| 1 day | 5,700 psi (39300.1 kPa) |
| 3 days | 6,600 psi (45505.4 kPa) |
| 7 days | 7,600 psi (52400.2 kPa) |
| 28 days | 9,400 psi (64810.7 kPa) |

### EXAMPLE 3

A cement mixture was formed consisting of:
95.98 parts Class C fly ash
1.40 parts potassium hydroxide
1.28 parts citric acid
1.02 parts borax
0.05 part Cormix SP-1P®
Cormix 2000 SP-1P® is a sodium salt of a copolymer of an unsaturated carboxylic acid and the hydroxyaklyl ester of such an acid. Cormix® meets the requirements of ASTM C-494 as a Type G admixture (water-reducing, high range, and retarding admixture).

### EXAMPLE 4

A concrete was prepared employing the cement of Example 3 and other necessary materials as indicated below:
827 parts of cement of Example 3
1362 parts sand
1669 parts gravel
142 parts water
The various materials were mixed in a concrete mixer. The concrete had an open or working time of 20 minutes. Part of the concrete was cast in molds and cured at ambient temperature (73°F) (22.8°C). This concrete had compressive strengths of 2,000 13789.5 kPa psi at 4 hours, 4,200 28958.0 kPa psi at 1 day, and 7,600 psi 52400.2 kPa at 7 days.

The remaining concrete was cast in molds and stored at ambient temperatures (73°F) (22.8°C) for one hour, then cured at 195°F (90.6°C) for one and one-half hours. Specimens were then cured in ambient (73°F) (22.8°C) air until tested. This concrete had compressive strengths of 5,000 psi 34473.8 kPa at 4 hours, 6,500 psi 44815.9 kPa at 1 day, and 7,600 psi 52400.2 kPa at 7 days.

### EXAMPLE 5

A cement mixture was formed consisting of:
95.98 parts of Class C fly ash
1.40 parts potassium hydroxide
1.28 parts citric acid
1.02 parts borax
0.05 part Cormix 2000 cp®
The Cormix 2000® is the sodium salt of a copolymer of an unsaturated carboxylic acid and the hydroxyalkyl ester of that acid. The material meets the requirements of ASTM C-494-86, as a type G admixture, one which is water-reducing, high range, and retarding.

### EXAMPLE 6

A concrete was prepared employing the cement of Example 5 and other necessary materials as indicated below:
827 parts of cement of Example 5
1362 parts sand
1669 parts gravel
142 parts water
The various materials were mixed in a concrete mixer. The concrete had an open or working time of 32 minutes. Part of the concrete was cast in molds and cured at ambient temperature (73°F) (22.8°C). This concrete had compressive strengths of 1,300 psi 8963.2 kPa at 4 hours, 2,800 psi 19305.3 kPa at 1 day, and 5,5000 psi 37921.2 kPa at 7 days.

The remaining concrete was cast in molds and stored at ambient temperature (73°F) (22.8°C) for one hour, then cured at 195°F 90.6°C for one and one-half hours. Specimens were then cured in ambient (73°F) (22.8°C) air until tested. This concrete had compressive strengths of 2,200 psi 15167.0 kPa at 4 hours, 3,200 psi 22063.2 kPa at 1 day, and 4,500 psi 31026.4 kPa at 7 days.

### EXAMPLE 7

A cement mixture was made consisting of:
95.98 parts Class C fly ash
1.40 parts potassium hydroxide
1.28 parts citric acid
1.02 parts borax
0.05 part WRDA-79P®
WRDA 79-P® is a modified lignosulfonate, with catalyst. It meets the requirements of ASTM C-494 as a Type A admixture (water-reducing admixture) and Type D admixture (water-reducing and retarding admixture).

### EXAMPLE 8

A concrete was prepared employing the cement of Example 7 and other necessary materials as indicated below:
827 parts of cement of Example 7
1362 parts sand
1669 parts gravel
142 parts water
The various materials were mixed in a concrete mixer. The concrete had an open or working time of 28 minutes. Part of the concrete was cast in molds and cured at ambient temperature (73°F) (22.8°C). This concrete had compressive strengths of 1,900 psi 13100.0 kPa at 4 hours, 3,600 psi 24821.1 kPa at 1 day, and 7,600 psi 52400.2 kPa at 7 days.

The remaining concrete was cast in molds and stored at ambient temperatures (73°F) (22.8°C) for one hour, then cured at 195°F 90.6°C for one and one-half hours. Specimens were then cured in ambient (73°F) (22.8°C) air until tested. This concrete had compressive strengths of 2,900 psi 19995.0 kPa at 4 hours, 4,200 psi 28958.0 kPa at 1 day, and 5,800 psi 39990.0 kPa at 7 days.

### EXAMPLE 9

A cement mixture was made consisting of:
95.98 parts Class C fly ash
1.40 parts potassium hydroxide
1.28 parts citric acid
1.02 parts borax
0.05 part Daracem 100P®
Daracem 100P® is a dispersion of sulfonated napthalene formaldehyde condensate, a gluconate, and a lignosulfonate. Daracem 100P® meets the requirements of ASTM C-494 as a Type G admixture (water-reducing high range, and retarding admixture).

### EXAMPLE 10

A concrete was prepared employing the cement of Example 9 and other necessary materials as indicated below:
827 parts of cement of Example 9
1362 parts sand
1669 parts gravel
142 parts water
The various materials were mixed in a concrete mixer. The concrete had an open or working time of 30 minutes. Part of the concrete was cast in molds and cured at ambient temperature (73°F) (22.8°C). This concrete had compressive strengths of 1,900 psi 13100.0 kPa at 4 hours, 3,800 psi 26200.1 kPa at 1 day, and 7,700 psi 53089.7 kPa at 7 days.

The remaining concrete was cast in molds and stored at ambient temperature (73°F) (22.8°C) for one hour, then cured at 195°F (90.6°C) for one and one-half hours. Specimens were then cured in ambient (73°F) (22.8°C) air until tested. This concrete had compressive strengths of 3,800 psi 26200.1 kPa at 4 hours, 4,900 psi 33784.3 kPa at 1 day, and 6,200 psi 42747.5 kPa at 7 days.

### EXAMPLE 11

A cement mixture was made consisting of:
95.98 parts Class C fly ash
1.40 parts potassium hydroxide
1.28 parts citric acid
1.02 parts borax
0.025 part Cormix 2000 cp®
0.025 part Cormix SP-1P®

### EXAMPLE 12

A concrete was prepared employing the cement of Example 11 and other necessary materials as indicated below:
827 parts of cement of Example 11
1362 parts sand
1669 parts gravel
142 parts water
The various materials were mixed in a concrete mixer. The concrete had an open or working time of 25 minutes. Part of the concrete was cast in molds and cured at ambient temperature (73°F) (22.8°C). This concrete had compressive strengths of 2,400 psi 16547.4 kPa at 4 hours and 5,000 psi 34473.8 kPa at 1 day.

The remaining concrete was cast in molds and stored at ambient temperature (73°F) (22.8°C) for one hour, then cured at 195°F (90.6°C) for one and one-half hours. Specimens were then cured in ambient (73°F) (22.8°C) air until tested. This concrete had compressive strengths of 5,100 psi 35163.3 kPa at 4 hours and 7,300 psi 50331.7 kPa at 1 day.

### EXAMPLE 13

A mortar was prepared employing the cement of Example 1 and other necessary materials as indicated below:
1480 parts of the cement of Example 1
2274 parts sand
246 parts water
The various materials were mixed in a mortar mixer. The mortar had an open or working time of 30 minutes. Part of the mortar was cast in molds and cured at ambient temperature (73°F) (22.8°C). This mortar had compressive strengths as follows:

| Age | Strength |
|---|---|
| 2 hours | 2,000 psi (13789.5 kPa) |
| 3 hours | 2,300 psi (15857.9 kPa) |
| 4 hous | 2,700 psi (18615.9 kPa) |
| 1 day | 5,400 psi (37231.7 kPa) |
| 3 days | 8,400 psi (57916.0 kPa) |
| 7 days | 10,000 psi (68947.6 kPa) |
| 28 days | 13,200 psi (91010.8 kPa) |

The remaining mortar was cast in molds and stored at ambient temperature (73°F) (22.8°C) for one hour, then cured at 195°F (90.6°C) for one and one-half hours. Specimens were then cured in ambient (73°F) (22.8°C) air until tested. This mortar had compressive strengths as follows:

| Age | Strength |
|---|---|
| 4 hours | 4,400 psi (30336.9 kPa) |
| 1 day | 5,800 psi (39989.6 kPa) |
| 28 days | 12,800 psi (88252.9 kPa) |

### EXAMPLE 14

A cement mixture was made consisting of:
96.41 parts Class C fly ash
1.28 parts potassium hydroxide
1.28 parts citric acid
1.03 parts borax

### EXAMPLE 15

A mortar was prepared employing the cement of Example 14 and other necessary materials as indicated below:
1479 parts of the cement of Example 14
2275 parts sand
246 parts water
The various materials were mixed in a mortar mixer. The mortar had an open or working time of 37 minutes. Part of the mortar was cast in molds and cured at ambient temperatures (73°F) (22.8°C). This mortar had compressive strengths as follows:

| Age | Strength |
|---|---|
| 2 hours | 1,800 psi (12410.6 kPa) |
| 3 hours | 2,200 psi (15168.5 kPa) |
| 4 hours | 2,400 psi (16547.4 kPa) |
| 1 day | 4,700 psi (32405.4 kPa) |
| 3 days | 7,400 psi (51021.2 kPa) |
| 7 days | 8,500 psi (58605.5 kPa) |
| 28 days | 12,000 psi (82737.1 kPa) |

The remaining mortar was cast in molds and stored at ambient temperature (73°F) (22.8°C) for one hour, then cured at 195°F (90.6°C) for one and one-half hours. Specimens were then cured in ambient (73°F) (22.8°C) air until tested. This mortar had compressive strengths as follows:

| Age | Strength |
|---|---|
| 4 hours | 3,400 psi (23442.2 kPa) |
| 1 day | 5,000 psi (34473.8 kPa) |
| 28 days | 12,000 psi (82737.1 kPa) |

### EXAMPLE 16

A cement mixture was made consisting of:
96.53 parts Class C fly ash
1.16 parts potassium hydroxide
1.28 parts citric acid
1.03 parts borax

### EXAMPLE 17

A mortar was prepared employing the cement of Example 16 and other necessary materials as indicated below:
1477 parts of the cement of Example 16
2276 parts sand
247 parts water
The various materials were mixed in a mortar mixer. The mortar had an open or working time of 45 minutes. Part of the mortar was cast in molds and cured at ambient temperature (73°F) (22.8°C). This mortar had compressive strengths as follows:

| Age | Strength |
|---|---|
| 2 hours | 1,500 psi (10342.1 kPa) |
| 3 hours | 2,000 psi (13789.5 kPa) |
| 4 hours | 2,200 psi (15168.5 kPa) |
| 1 day | 4,200 psi (28958.0 kPa) |
| 3 days | 6,600 psi (45505.4 kPa) |
| 7 days | 8,300 psi (57226.5 kPa) |
| 28 days | 11,700 psi (80668.7 kPa) |

The remaining mortar was cast in molds and stored at ambient temperature (73°F) (22.8°C) for one hour, then cured at 195°F (90.6°C) for one and one-half hours. Specimens were then cured in ambient ( 73°F) (22.8°C) air until tested. This mortar had compressive strengths as follows:

| Age | Strength |
|---|---|
| 4 hours | 3,100 psi (21373.8 kPa) |
| 1 day | 5,200 psi (35852.8 kPa) |
| 28 days | 11,100 psi (76531.8 kPa) |

### EXAMPLE 18

A cement mixture was prepared consisting of:
96.66 parts Class C fly ash
1.03 parts potassium hydroxide
1.28 parts citric acid
1.03 parts borax

### EXAMPLE 19

A mortar was prepared employing the cement of Example 18 and other necessary materials as indicated below:
1476 parts of the cement of Example 18
2277 parts sand
247 parts water
The various materials were mixed in a mortar mixer. The mortar had an open or working time of 60 minutes. Part of the mortar was cast in molds and cured at ambient temperature (73°F) (22.8°C). This mortar had compressive strengths as follows:

| Age | Strength |
|---|---|
| 2 hours | 1,300 psi (8963.2 kPa) |
| 3 hours | 1,800 psi (12410.6 kPa) |
| 4 hours | 2,200 psi (15168.5 kPa) |
| 1 day | 4,000 psi (27579.0 kPa) |
| 3 days | 6,300 psi (43437.0 kPa) |
| 7 days | 8,200 psi (56537.0 kPa) |
| 28 days | 11,700 psi (80668.7 kPa) |

The remaining mortar was cast in molds and stored at ambient temperature (73°F) (22.8°C) for one hour, then cured at 195°F (90.6°C) for one and one-half hours. Specimens were then cured in ambient (73°F) (22.8°C) air until tested. This mortar had compressive strengths as follows:

| Age | Strength |
|---|---|
| 4 hours | 2,400 psi (16547.4 kPa) |
| 1 day | 5,300 psi (36542.2 kPa) |
| 28 days | 11,200 psi (77221.3 kPa) |

### EXAMPLE 20

A cement mixture was prepared consisting of:
96.79 parts Class C fly ash
0.90 part potassium hydroxide
1.28 parts citric acid
1.03 parts borax

### EXAMPLE 21

A mortar was prepared employing the cement of Example 20 and other necessary materials as indicated below:
1475 parts of the cement of Example 20
2278 parts sand
247 parts water
The various materials were mixed in a mortar mixer. The mortar had an open or working time of 110 minutes. Part of the mortar was cast in molds and cured at ambient temperature (73°F (22.8°C). This mortar had compressive strengths as follows:

| Age | Strength |
|---|---|
| 2 hours | 160 psi (1103.2 kPa) |
| 3 hours | 1,200 psi (8273.7 kPa) |
| 4 hours | 1,600 psi (11031.6 kPa) |
| 1 day | 3,600 psi (24821.1 kPa) |
| 3 days | 5,400 psi (37231.7 kPa) |
| 7 day | 6,900 psi (4753.8 kPa) |
| 28 days | 9,700 psi (66879.2 kPa) |

The remaining mortar was cast in molds and stored at ambient temperature (73°F) (22.8°C) for one hour, then cured at 195°F (90.6°C) for one and one-half hours. Specimens were then cured in ambient (73°F) (22.8°C) air until tested. This mortar had compressive strengths as follows:

| Age | Strength |
|---|---|
| 4 hours | 2,000 psi (13789.5 kPa) |
| 1 day | 5,000 psi (34473.8 kPa) |
| 28 days | 9,900 psi (68258.1 kPa) |

### EXAMPLE 22

A cement mixture was prepared consisting of:
96.91 parts Class C fly ash
0.77 part potassium hydroxide
1.28 parts citric acid
1.03 parts borax

### EXAMPLE 23

A mortar was prepared employing the cement of Example 22 and other necessary materials as indicated below:
1474 parts of the cement of Example 22
2279 parts sand
247 parts water
The various materials were mixed in a mortar mixer. The mortar had an open or working time of 135 minutes. Part of the mortar was cast in molds and cured at ambient temperature (73°F) (22.8°C). This mortar had compressive strengths as follows:

| Age | Strength |
|---|---|
| 2 hours | not set |
| 3 hours | 640 psi (4412.6 kPa) |
| 4 hours | 1,400 psi (9652.7 kPa) |
| 1 day | 3,100 psi (21373.8 kPa) |
| 3 days | 4,900 psi (33784.3 kPa) |
| 7 days | 5,500 psi (37921.2 kPa) |
| 28 days | 8,900 psi (61363.4 kPa) |

The remaining mortar was cast in molds and stored at ambient temperature (73°F) (22.8°C) for one hour, then cured at 195°F (90.6°C) for one and one-half hours. Specimens were then cured in ambient (73°F) (22.8°C) air until tested. The mortar had compressive strengths as follows:

| Age | Strength |
|---|---|
| 4 hours | 1,000 psi (6894.8 kPa) |
| 1 day | 3,100 psi (21373.8 kPa) |
| 28 days | 7,900 psi (54468.6 kPa) |

### EXAMPLE 24

A mortar was prepared as in Example 19 and cast in molds at ambient temperature (73°F) (22.8°C). The specimens were cooled at 5°F (-15.0°C) and maintained at that temperature until shortly before testing. At that time the specimens were warmed to 73°F (22.8°C) and tested for compressive strength. The mortar had strengths of 700 psi 4826.3 kPa at 4 hours, 1,200 psi 8273.7 kPa at 1 day, 1,500 psi 10342.1 kPa at 7 days, and 3,400 psi 23442.2 kPa at 28 days.

### EXAMPLE 25

A cement mixture was prepared consisting of:
96.91 parts Class C fly ash
0.77 part sodium hydroxide
1.29 parts citric acid
1.03 parts borax

### EXAMPLE 26

A mortar was prepared employing the cement of Example 25 and other necessary materials as indicated below:
1467 parts of the cement of Example 25
2268 parts sand
265 parts water
The various materials were mixed in a mortar mixer. The mortar had an open or working time of 40 minutes. The mortar was cast in molds and cured at ambient temperatures (73°F) (22.8°C). This mortar had compressive strengths of 1,700 psi 11721.1 kPa at 2 hours, 2,000 psi 13789.5 kPa at 3 hours, 2,200 psi 15168.5 kPa at 4 hours, and 4,100 psi 28268.5 kPa at 1 day.

### EXAMPLE 27

A cement mixture was prepared consisting of:
94.95 parts Class C fly ash
3.79 parts potassium carbonate
1.26 parts citric acid

### EXAMPLE 28

A mortar was prepared employing the cement of Example 27 and other necessary materials as indicated below:
1482 parts cement of Example 27
2246 parts sand
272 parts water
The various materials were mixed in a mortar mixer. The mortar had an open or working time of 30 minutes. The mortar was mixed, cast in molds and cured at ambient temperature (73°F) (22.8°C). The mortar had compressive strengths as follows:

| Age | Strength |
|---|---|
| 2 hours | 1,100 psi (7584.2 kPa) |
| 3 hours | 1,500 psi (10342.1 kPa) |
| 4 hours | 1,700 psi (11721.1 kPa) |
| 1 day | 4,100 psi (28268.5 kPa) |
| 3 days | 5,800 psi (39989.6 kPa) |
| 7 days | 8,400 psi (57916.0 kPa) |

### EXAMPLE 29

A cement mixture was prepared consisting of:
90.69 parts Class C fly ash
7.98 parts kiln stack dust
1.33 parts citric acid
The kiln stack dust had the following properties:
Specific Gravity = 2.63

### CHEMICAL

Leco S0₃ = 11.70%
Atomic Absorption Na₂0 = 2.25%
Atomic Absorption K₂0 = 25.2%
Loss = 12.25%
Moisture Content = 0.57%
Water Soluble Alkali: Na₂0 = 2.1%
Water soluble Alkali: K₂0 = 20.4%

### FINENESS

- Sieves:: No. 200 = 90.5%
No. 325 = 86.3%
- Blaine:: 18,619 cm²/g

### X-RAY DIFFRACTION; CRYSTAL STRUCTURES PRESENT:

1) Calcium Carbonate
2) Potassium Sulfate
3) Potassium Sodium Sulfate

### EXAMPLE 30

A mortar was prepared employing the cement of Example 29 and other necessary materials as indicated below:
1424 parts cement of Example 29
2273 parts sand
303 parts water
The various materials were mixed in a mortar mixer. The mortar had an open or working time of 30 minutes. The mortar was mixed, cast in molds and cured at ambient temperature (73°F) (22.8°C). The mortar had compressive strengths of 1,300 psi 8963.2 kPa at 2 hours, 1,500 psi 10342.1 kPa at 3 hours, and 1,600 psi 11031.6 kPa at 4 hours.

### EXAMPLE 31

A cement mixture was prepared consisting of:
92.02 parts Class C fly ash
6.65 parts kiln stack dust
1.33 parts citric acid

### EXAMPLE 32

A mortar was prepared employing the cement of Example 31 and other necessary materials as indicated below:
1431 parts cement of Example 31
2284 parts sand
285 parts water
The various materials were mixed in a mortar mixer. The mortar had an open or working time of 30 minutes. The mortar was mixed, cast in molds and cured at ambient temperature (73°F) (22.8°C). The mortar had compressive strengths of 1,200 psi 8273.7 kPa at 2 hours, 1,500 psi 10342.1 kPa at 3 hours, 1,800 psi 12410.6 kPa at 4 hours, and 4,000 psi 27579.0 kPa at 1 day.

While specific examples of the present invention have been shown and described, they should be considered as merely illustrative, and not as limiting, in any way, the full scope of the invention as set forth in the appended claims.

## Claims

1. A hydraulic cement comprising, by weight:
from about 90 to 97 parts Class C fly ash;
from about 1/2 to 10 parts alkali metal compound containing activator; and
from about 1/2 to 3 parts admixture.

2. The hydraulic cement of Claim 1 wherein the alkali metal compound containing activator is portland cement kiln dust.

3. The hydraulic cement of Claim 1 wherein the alkali metal compound containing activator is from 1/2 to 4 parts of at least one material selected from the group consisting of potassium hydroxide, potassium carbonate, sodium hydroxide, and sodium carbonate.

4. The hydraulic cement of Claim 3 wherein the amount is from about 1/2 to 3 parts.

5. The hydraulic cement of Claims 3 or 4 wherein the alkali metal compound containing activator is potassium hydroxide.

6. The hydraulic cement of Claim 1 wherein the admixture is selected from the class consisting of citric acid; borax; a sodium salt of a copolymer of an unsaturated carboxylic acid and the hydroxyalkyl ester of said acid; a modified lignosulfonate with catalyst; and a dispersion of sulfonated naphthalene formaldehyde condensate, a gluconate and a lignosulfonate.

7. The hydraulic cement of Claim 6 wherein the admixture is from about 1/2 to 1 1/2 parts citric acid and from about 1/2 to 1 1/2 parts borax.

8. The hydraulic cement of Claim 6 wherein the admixture is citric acid.

9. A two part composition for hydraulic cement, wherein said two parts are blended prior to preparation of the cement, comprising:
a. a first part comprising from 90 to 97 parts, by weight, Class C fly ash; and
b. a second part comprising:
(1) from about 1/2 to 10 parts alkali metal compound containing activator and
(2) from about 1/2 to 3 parts admixture.

10. The composition of Claim 9 wherein the alkali metal compound containing activator is portland cement kiln dust.

11. The composition of Claim 9 wherein the alkali metal compound containing activator is from 1/2 to 4 parts of at least one material selected from the group consisting of potassium hydroxide, potassium carbonate, sodium hydroxide, and sodium carbonate.

12. The composition of Claim 11 wherein the amount is from about 1/2 to 3 parts.

13. The composition of Claim 9 wherein the alkali metal compound containing activator is potassium hydroxide.

14. The composition of Claim 9 wherein the admixture is selected from the class consisting of citric acid; borax; a sodium salt of a copolymer of an unsaturated carboxylic acid and the hydroxyalkyl ester of such an acid; a modified lignosulfonate with catalyst; and a dispersion of sulfonated naphthalene formaldehyde condensate, a gluconate and a lignosulfonate.

15. The composition of Claim 14 wherein the admixture is from about 1/2 to 1 1/2 parts citric acid and from about 1/2 to 1 1/2 parts borax.

16. The composition of Claim 14 wherein the admixture is citric acid.

## Patentansprüche

1. Hydraulischer Zement, enthaltend als Gewichtsteile:
von etwa 90 bis 97 Teile Flugasche der Klasse C;
von etwa 1/2 bis 10 Teile eines eine Alkalimetallverbindung enthaltenden Aktivators; und
von etwa 1/2 bis 3 Teile Beimischung.

2. Hydraulischer Zement nach Anspruch 1, wobei der eine Alkalimetallverbindung enthaltende Aktivator Staub von Portlandzement-Öfen ist.

3. Hydraulischer Zement nach Anspruch 1, wobei der eine Alkalimetallverbindung enthaltende Aktivator 1/2 bis 4 Teile wenigstens eines Materials ist, das aus der Gruppe ausge wählt wurde, die aus Kaliumhydroxid, Kaliumcarbonat, Natriumhydroxid und Natriumcarbonat besteht.

4. Hydraulischer Zement nach Anspruch 3, wobei die Menge von etwa 1/2 bis 3 Teile beträgt.

5. Hydraulischer Zement nach den Ansprüchen 3 oder 4, wobei der eine Alkalimetallverbindung enthaltende Aktivator Kaliumhydroxid ist.

6. Hydraulischer Zement nach Anspruch 1, wobei die Beimischung aus der Gruppe ausgewählt wurde, die aus Zitronensäure; Borax; Natriumsalzen von Copolymeren aus ungesättigten Carbonsäuren und deren Hydroxyalkylestern; modifizierten Ligninsulfonaten mit Katalysator; und Dispersionen von Kondensationsprodukten aus Naphthalinsulfosäure und Formaldehyd, Gluconaten und Ligninsulfonaten.

7. Hydraulischer Zement nach Anspruch 6, wobei die Beimischung von etwa 1/2 bis 1 1/2 Teile Zitronensäure und von etwa 1/2 bis 1 1/2 Teile Borax beträgt.

8. Hydraulischer Zement nach Anspruch 6, wobei die Beimischung Zitronensäure ist.

9. Gemisch zur Herstellung von hydraulischem Zement, das aus zwei vorgemischten Anteilen besteht, enthaltend :
a. einen ersten, 90 bis 97 Gewichtsteile Flugasche der Klasse C enthaltenden Anteil; und
b. einen zweiten Anteil, enthaltend
(1) von etwa 1/2 bis 10 Teile eines eine Alkalimetallverbindung enthaltenden Aktivators und
(2) von etwa 1/2 bis 3 Teile Beimischung.

10. Gemisch nach Anspruch 9, wobei der eine Alkalimetallverbindung enthaltende Aktivator Staub von Portlandzement-Öfen ist.

11. Gemisch nach Anspruch 9, wobei der eine Alkalimetallverbindung enthaltende Aktivator von 1/2 bis 4 Teile wenigstens eines Materials ist, das aus der Gruppe ausgewählt wurde, die aus Kaliumhydroxid, Kaliumcarbonat, Natriumhydroxid und Natriumcarbonat besteht.

12. Gemisch nach Anspruch 11, wobei die Menge von etwa 1/2 bis 3 Teile beträgt.

13. Gemisch nach Anspruch 9, wobei der eine Alkalimetallverbindung enthaltende Aktivator Kaliumhydroxid ist.

14. Gemisch nach Anspruch 9, wobei die Beimischung aus der Gruppe ausgewählt ist, die aus Zitronensäure; Borax; Natriumsalzen von Copolymeren aus ungesättigten Carbonsäuren und deren Hydroxyalkylestern; modifizierten Ligninsulfonaten mit Katalysator; und Dispersionen von Kondensationsprodukten aus Naphthalinsulfosäure und Formaldehyd, Gluconaten und Ligninsulfonaten besteht.

15. Gemisch nach Anspruch 14, wobei die Beimischung von etwa 1/2 bis 1 1/2 Teile Zitronensäure und von etwa 1/2 bis 1 1/2 Teile Borax ist.

16. Gemisch nach Anspruch 14, wobei die Beimischung Zitronensäure ist.

## Revendications

1. Un ciment hydraulique comprenant, en poids :
d'environ 90 à 97 parties de cendre volante de Classe C;
d'environ 0,5 à 10 parties d'activateur contenant un composé d'un métal alcalin ; et
d'environ 0,5 à 3 parties d'additif.

2. Le ciment hydraulique de la revendication 1 dans lequel l'activateur contenant un composé d'un métal alcalin est de le poussière de four à ciment Portland.

3. Le ciment hydraulique de la revendication 1 dans lequel l'activateur contenant un composé d'un métal alcalin est constitué de 0,5 à 4 parties d'au moins une matière choisie dans le groupe formé par l'hydroxyde de potassium, le carbonate de potassium, l'hydroxyde de sodium et le carbonate de sodium.

4. Le ciment hydraulique de la revendication 3 dans lequel la quantité est d'environ 0,5 à 3 parties.

5. Le ciment hydraulique de la revendication 3 ou 4 dans lequel l'activateur contenant un composé d'un métal alcalin est l'hydroxyde de potassium.

6. Le ciment hydraulique de la revendication 1 dans lequel l'additif est choisi dans la classe formée par l'acide citrique ; le borax ; un sel sodique d'un copolymère d'un acide carboxylique insaturé et de l'ester d'hydroxyalkyle dudit acide ; un lignosulfonate modifié par un catelyseur ; et une dispersion de condensat de formaldéhyde-naphtalène sulfoné, d'un gluconate et d'un lignosulfonate.

7. Le ciment hydraulique de la revendication 6 dans lequel l'additif est formé d'environ 0,5 à 1,5 partie d'acide citrique et d'environ 0,5 à 1,5 partie de borax.

8. Le ciment hydraulique de la revendication 6 dans lequel l'additif est de l'acide citrique.

9. Une composition en deux parties pour ciment hydraulique, dans laquelle lesdites deux parties sont mélangées avant préparation du ciment, comprenant :
a. une première partie comprenant de 90 à 97 parties en poids de cendre volante de Classe C ; et
b. une deuxième partie comprenant :
(1) d'environ 0,5 à 10 parties d'activateur contenant un composé d'un métal alcalin, et
(2) d'environ 0,5 à 3 parties d'additif.

10. La composition de la revendication 9 dans laquelle l'activateur contenant un composé d'un métal alcalin est de la poussière de four à ciment Portland.

11. La composition de la revendication 9 dans laquelle l'activateur contenant un composé d'un métal alcalin est constitué de 0,5 à 4 parties d'au moins une matière choisie dans le groupe formé par l'hydroxyde de potassium, le carbonate de potassium, l'hydroxyde de sodium et le carbonate de sodium.

12. La composition de la revendication 11 dans laquelle la quantité est d'environ 0,5 à 3 parties.

13. La composition de la revendication 9 dans laquelle l'activateur contenant un composé d'un métal alcalin est l'hydroxyde de potassium.

14. La composition de la revendication 9 dans laquelle l'additif est choisi dans la classe formée par l'acide citrique ; le borax ; un sel sodique d'un copolymère un acide carboxlique insaturé et de l'ester d'hydroxyalkyle d'un tel acide ; un lignosulfonate modifié par un catalyseur ; et une dispersion de condensat de formaldéhyde-naphtalène sulfoné, d'un gluconate et d'un lignosulfonate.

15. La composition de la revendication 14 dans laquelle l'additif est formé d'environ 0,5 à 1,5 partie d'acide citrique et d'environ 0,5 à 1,5 partie de borax.

16. La composition de la revendication 14 dans laquelle l'additif est de l'acide citrique.
